# EUROPÄISCHE PATENTSCHRIFT

(11) **EP 0 985 055 B1**
(45) Veröffentlichungstag und Bekanntmachung des Hinweises auf die Patenterteilung: **13.03.2002**
(21) Anmeldenummer: 98930750.9
(22) Anmeldetag: 20.05.1998
(51) Int. Cl.: C23C 4/10, F01N 7/14, F01N 7/10

(54) **ABGASFÜHRENDES KRAFTFAHRZEUGBAUTEIL**
MOTOR VEHICLE COMPONENT FOR EXHAUST GAS ROUTING
ELEMENT CONDUCTEUR DES GAZ D'ECHAPPEMENT POUR VEHICULE

(30) Priorität: 24.05.1997 DE 19721796
(43) Veröffentlichungstag der Anmeldung: 15.03.2000
(73) Patentinhaber: AUDI AG, 85045 Ingolstadt (DE)
(72) Erfinder: BAUER, Hans, D-91126 Rednitzhembach (DE)
(86) Internationale Anmeldenummer: EP9803169
(87) Internationale Veröffentlichungsnummer: WO9853113

(56) Entgegenhaltungen:
- EP-A- 0 835 947
- DE-A- 4 445 118
- DE-C- 4 314 204
- US-A- 4 168 610
- US-A- 5 108 817
- US-A- 5 296 288
- US-A- 5 589 144
- PATENT ABSTRACTS OF JAPAN vol. 017, no. 240 (M-1409), 14. Mai 1993 & JP 04 365959 A (JAPAN ELECTRON CONTROL SYST CO LTD), 17. Dezember 1992
- PATENT ABSTRACTS OF JAPAN vol. 018, no. 374 (M-1638), 14. Juli 1994 & JP 06 101468 A (TOYOTA MOTOR CORP), 12. April 1994

## Beschreibung

Die Erfindung betrifft ein abgasführendes Kraftfahrzeugbauteil gemäß dem Oberbegriff des Anspruchs 1.

In einem Kraftfahrzeug sind verschiedene Bauteile vorhanden, die im Betrieb relativ hohe Temperaturen (ca. 500 bis 1000° C) annehmen. Im allgemeinen sind dies abgasführende metallische Bauteile, die durch die Verbrennungsgase der Brennkraftmaschine sehr stark erwärmt werden.

Derartige Bauteile geben im Betrieb relativ viel Wärme an die Umgebung ab. Die Wärmeabgabe erfolgt über Strahlung bzw. über Konvektion. Im angesprochenen Temperaturbereich überwiegt die Wärmeabgabe durch Infrarotstrahlung.
Die Wärmeabgabe durch Strahlung ist proportional zum Emissionsgrad ε der abstrahlenden Fläche. Der Emissionsgrad ε ist auch abhängig von der Temperatur der abstrahlenden Fläche. Metallische Oberflächen, die normalerweise einen Wert ε = 0.1 aufweisen, sind, sobald sie Temperaturen von 500 - 1000 C länger ausgesetzt sind, in der Regel angelaufen (oxidiert). Angelaufene Metalloberflächen weisen aber bei ca 800°C einen relativ hohen Wert ε = 0.9 auf, d.h. sie strahlen in diesem Temperaturbereich verstärkt Wärme an die Umgebung ab.
Außerdem wird durch die zunehmende Dichte von Aggregaten im Motorraum neuerer Kraftfahrzeuge der Wärmetransport durch Konvektion zunehmend behindert, was zu einer zusätzlichen Temperaturerhöhung dieser abgasführenden Bauteile führt. Dies bedingt ebenfalls eine erhöhte Wärmestrahlung.

Insbesondere die umliegenden Bauteile werden durch diese Wärmestrahlung in nicht unerheblichem Maße erwärmt.
In der Regel sind diese umliegenden Bauteile jedoch nicht für höhere Temperaturen ausgelegt. Um diese Bauteile vor zu starker Erwärmung zu schützen, werden in bekannter Weise aufwendige Isolationsmaßnahmen, wie Wärmeabschirmbleche bzw, luftspaltisolierte Doppelwandrohre, eingesetzt.
Die Gewichtsersparnis, die z.B. durch die Verwendung von Kunststoffbauteilen im Motorraum erreicht wird, wird teilweise durch den notwendigen höheren Isolieraufwand wieder aufgehoben.
Die Isolationsmaßnahmen erfordern einen erhöhten Montageaufwand, sie führen zu einer unerwünschten Gewichtszunahme des Fahrzeuges, sie benötigen zusätzlichen Bauraum und sie sind teuer. Weiterhin können zusätzliche Schwingungsfestigkeits- und Korrosionsprobleme bei derartiger Teilen auftreten.
Vor allem die in der Nähe dieser abgasführenden Kraftfahrzeugbauteile angeordneten Kunststoffbauteile müssen, wenn die Isolationsmaßnahmen nicht ausreichen, für immer höhere Temperaturen ausgelegt werden und sind damit teuer.

Die vorstehend beschriebene Thematik wird ausführlich auch in der US 5,589,144 behandelt. Dort sucht man die Wärmeabstrahlung auf umliegende Bauteile dadurch zu verhindern, daß auf der Innenseite der abgasführenden Kraftfahrzeugbauteile eine Wärmedämmung aufgebracht wird.

Die nicht vorveröffentlichte EP-0835947-A1 beschreibt ein mit einer Aluminium-Silizium Legierung beschichtetes Stahlblech, das eine monochromatische Emissivität von weniger als 0,1 für den Wellenlängenbereich von 1,5 - 15 Mikrometer aufweist. Dieses beschichtete Blech wird insbesondere für heiße abgasführende Bauteile wie Abgasrohre und Katalysatorelemente von Automobilen eingesetzt. Die Erwärmung dieser abgasführenden Bauteile führt zu Temperaturen von oberhalb 500° C. Diese Entgegenhaltung offenbart keinerlei Hinweise auf eine Beschichtung, die aus keramischen Material besteht und dabei eine Emissivität von ε < 0,5 aufweist.

Aufgabe der vorliegenden Erfindung ist es, ein abgasführendes Kraftfahrzeugbauteil zu schaffen, das die oben genannten Nachteile nicht besitzt, das insbesondere bei ca. 800° C eine geringe Wärmestrahlung aufweist, das keinen zusätzlichen Bauraum benötigt und das einfach und kostengünstig herstellbar ist.

Gelöst wird diese Aufgabe durch die im Anspruch 1 bzw. Anspruch 2 angegebenen Merkmale.

Vorteilhafte Weiterentwicklungen der Erfindung sind in den Unteransprüchen angegeben.

Die wesentliche Idee der Erfindung besteht darin, abgasführende Kraftfahrzeugbauteile, die beim Betrieb der Brennkraftmaschine hohe Temperaturen annehmen, mit einer Beschichtung zu versehen, deren Emissionsgrad ε unterhalb des Wertes ε = 0,5 liegt bzw. die ein Anlaufen der Oberfläche des Kraftfahrzeugbauteils verhindert.

Dadurch wird die Wärmestrahlung derartiger beschichteter abgasführender Kraftfahrzeugbauteile bei Temperaturen von ca. 800°C erheblich verringert, und so die Erwärmung umliegender Bauteile wesentlich reduziert.
Die Beschichtung läßt sich relativ leicht aufbringen und benötigt keinerlei konstruktive Änderungen am Bauteil. Sie erfordert keinen zusätzlichen Bauraum. Mit derart beschichteten Bauteilen ist eine kompakter Bauweise im Motorraum möglich, da umliegende Bauteile weniger stark thermisch belastet werden.
Vorhandene Isolationsmaßnahmen werden überflüssig und dadurch Gewichtseinsparungen möglich.
Als weiterer Vorteil ist bei Kraftfahrzeugen mit Abgaskatalysator zu nennen, daß durch die verminderte Wärmestrahlung derart beschichteter abgasführenden Kraftfahrzeugbauteile, die Abgastemperatur auf dem Weg vom Motor zum Abgaskatalysator langsamer abnimmt. Dies führt zu einer schnelleren Aufheizung des Abgaskatalysators nach dem Motorstart. Der Abgaskatalysator erreicht seine Betriebstemperatur schneller und ist somit früher funktionsfähig.

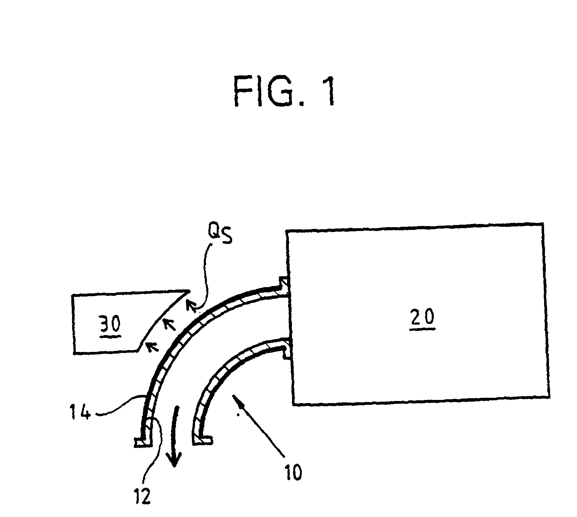

Nachfolgend ist die Erfindung anhand mehrerer Ausführungsbeispiele, von denen eines in der Zeichnung dargestellt ist, näher erläutert. Es zeigt die einzige Figur einen Motorraumausschnitt eines Kraftfahrzeuges mit Motorblock und Abgaskrümmer in schematischer Darstellung.

In der Figur ist ein Motorraumausschnitt eines Kraftfahrzeuges mit Motorblock 20 und Abgaskrümmer 10 schematisch dargestellt. Über den Abgaskrümmer 10 werden die heißen Verbrennungsgase vom Motor der Brennkraftmaschine zu einer in der Zeichnung nicht dargestellten Abgasanlage geführt. Die Temperatur der Abgase liegt bei etwa 600° bis 1000° C. Die Oberfläche 12 des Abgaskrümmers 10 weist eine erfindungsgemäße Beschichtung 14 auf, die wie nachfolgend näher erläutert ausgebildet ist.

Bei einem ersten Ausführungsbeispiel ist der Emissionsgrad ε der Beschichtung 14 des Abgaskrümmers 10 ist so gewählt, daß er bei einer Temperatur von ca. 800° erheblich unter dem Emissionsgrad ε einer oxidierten unbeschichteten Metalloberfläche (ε=0,9) liegt. Es hat sich gezeigt, daß insbesondere keramische Beschichtungen zum Beispiel Zirkonoxid ZrO₂ im Temperaturbereich von ca. 800° einen Emissionsgrad von ε < 0,5 besitzen. Anzumerken ist noch, daß bei Raumtemperatur Zirkonoxid einen relativ hohen Emissionsgrad von ε = 0.9 besitzt.

Neben Zirkonoxid eignet sich auch Yttriumoxid (Y₂O₃) und Titanoxid TiO₂ als Material für die Beschichtung 14.

Bei den Materialien kann es sich auch um Mischungen mit Titanoxid (TiO₂₎ handeln, wie z.B. TiO₂-Y₂O₃, ZrO₂-TiO₂.

### Ebenfalls geeignet sind emailleartige Beschichtungen

Neben keramischen Beschichtungen sind auch andere Arten von hochtemperaturbeständigen Beschichtungen denkbar deren ε-Wert bei ca. 800° unterhalb von 0,5 liegt.

Bei einem zweiten Ausführungsbeispiel ist die Beschichtung 14 des Abgaskrümmers 10 so gewählt, daß sie ein Anlaufen der Metalloberfläche verhindert und gleichzeitig infrarotdurchlässig ist. Hierfür sind Nano-Komposite z.B. anorganische Polymernetzwerke besonders geeignet. Die Funktion einer solchen Beschichtung ist nachfolgend näher erläutert.

Eine "reine" d. h. metallisch glänzende Oberfläche besitzt einen Wert ε ≈ 0,1. Normalerweise sind Metalloberflächen, die Temperaturen von mehreren hundert Grad ausgesetzt sind "angelaufen" d. h. oxidiert und besitzen einen Wert ε ≈ 0,9. Die Änderung des Emissionsgrades ε von metallischen Oberflächen wird hauptsächlich durch das "Anlaufen" verursacht. Der Emissionsgrad einer oxidierten reinen Metalloberfläche ( Stahl ) bzw. einer Gußoberfläche beträgt in diesem Temperaturbereich etwa ε ≈ 0,9. Die Beschichtung aus anorganischen Polymernetzwerken verhindert dagegen ein Anlaufen der Metalloberfläche. Da die Beschichtung infrarot durchlässig ist, bleibt der Emissionsgrad von ε ≈ 0,1 der Metalloberfläche auch nach längerem Betrieb des Abgaskrümmers 10 erhalten.

Nachfolgend ist die Wirkung der erfindungsgemäßen Beschichtungen auf umliegende Bauteile näher erläutert.
Die Erwärmung eines angrenzenden Bauteils 30 erfolgt bei einer Temperatur von ca. 800°C der Oberfläche 12 des Abgaskrümmers 10 hauptsächlich über Wärmestrahlung. Der Wärmestrom Qₛ aufgrund der Wärmestrahlung hängt in bekannter Weise von der vierten Potenz der Temperatur der Oberfläche und vom Emissionsgrad ε (ε = 1 für einen schwarzen Körper, ε = 0,9 für eine angelaufene Metalloberfläche) der Oberfläche 12 ab. Dadurch daß der Emissionsgrad ε der Oberfläche 12 des abgasführenden Kraftfahrzeugbauteils 12 durch die Beschichtung 14 bei einer Temperatur von ca. 800°C unterhalb 0,5 liegt, wird der Wärmestrom Qₛ erheblich verringert und dadurch das umliegende Bauteil 30 erheblich weniger erwärmt.

Die Beschichtung 14 wird mit Hilfe eines Flamm- oder Plasmaspritzverfahrens aufgetragen. Die Schichtdicke der Beschichtung 14 ist gegenüber den Ausmaßen des Abgaskrümmers 10 vernachlässigbar. Wichtig bei der Beschichtung 14 ist, daß sie in etwa den gleichen Wärmeausdehnungskoeffizienten aufweist, wie das Material des Abgaßkrümmers 10 um ein Abblättern der Beschichtung 14 zu verhindern.

In gleicher Weise können auch andere Kraftfahrzeugbauteile wie zum Beispiel Vorrohr etc. mit einer Beschichtung 14 versehen werden.

Nicht gezeigt ist als weiteres abgasführendes Kraftfahrzeugbauteil ein Abgaskatalysator, bei dem in einem Gehäuse ein Abgaskatalysatorelement angeordnet ist. Die Mantelfläche des Abgaskatalysatorelements ist mit einer erfindungsgemäßen Beschichtung 14 versehen. Durch die Beschichtung 14 wird, wie bereits erwähnt, der Wärmestrom insbesondere zur angrenzenden Gehäuseinnenseite erheblich vermindert. Die bei Abgaskatalysatoren mit keramischen Monolithen übliche hochtemperaturbeständige Quellmatte kann entfallen. Durch die geringere Wärmestrahlung erwärmt sich das Abgaskatalysatorelement nach dem Motorstart schneller und dadurch wird eine rascher einsetzende Funktionsfähigkeit des Abgaskatalysators erreicht. Natürlich kann auch nur das Gehäuse innen oder außen mit einer Beschichtung 14 versehen werden, um die Wärmeabgabe an die Umgebung zu verringern.

Die mit der erfindungsgemäßen Beschichtung 14 versehenen abgasführende Bauteile, geben erheblich weniger Energie durch Wärmestrahlung ab. Dies führt vor allem zur einer geringeren Erwärmung umliegender Bauteile.

## Patentansprüche

1. Abgasführendes Kraftfahrzeugbauteil mit einer die Wärmestrahlung des Kraftfahrzeugbauteiles beeinflussende Beschichtung, **dadurch gekennzeichnet daß** die Beschichtung (14)
- einer äußeren Oberfläche des Kraftfahrzeugbauteils zugeordnet ist,
- bei ca. 800° C einen Emmissionsgrad ε kleiner 0,5 besitzt,
- aus einem keramischen Material besteht.

2. Abgasführendes Kraftfahrzeugbauteil mit einer die Wärmestrahlung des Kraftfahrzeugbauteiles beeinflussenden Beschichtung, **dadurch gekennzeichnet, daß** die Oberfläche des Kraftfahrzeugbauteils (10, 50) eine infrarot transparente Beschichtung aufweist, die im wesentlichen aus einem anorganischem Polymernetzwerk besteht.

3. Kraftfahrzeugbauteil nach Anspruch 1, **dadurch gekennzeichnet, daß** die Beschichtung aus Zirkonoxid ZrO₂ besteht.

4. Kraftfahrzeugbauteil nach Anspruch 1, **dadurch gekennzeichnet, daß** die Beschichtung aus Yttriumoxid Y₂O₃ besteht.

5. Kraftfahrzeugbauteil nach Anspruch 1, **dadurch gekennzeichnet, daß** die Beschichtung aus Titanoxid TiO₂ besteht.

6. Kraftfahrzeugbauteil nach Anspruch 1 , daß die Beschichtung aus Mischungen von Zirkonoxid ZrO₂, Yttriumoxid Y₂O₃, Titanoxid TiO₂ besteht.

7. Kraftfahrzeugbauteil nach Anspruch 1 oder 2, **dadurch gekennzeichnet, daß** die Beschichtung (14) in Flamm- oder Plasmaspritztechnik aufgebracht wird.

8. Kraftfahrzeugbauteil nach einem der vorhergehenden Ansprüche, **dadurch gekennzeichnet, daß** das Bauteil ein Abgaskrümmer (10) ist.

9. Kraftfahrzeugbauteil nach einem der Ansprüche 1 bis 8, **dadurch gekennzeichnet, daß** das Bauteil ein Vorrohr ist.

10. Kraftfahrzeugbauteil nach einem der Ansprüche 1 bis 8, **dadurch gekennzeichnet, daß** das Bauteil ein Katalysatorelement ist.

## Claims

1. Exhaust gas ducting motor vehicle assembly part comprising a coating which affects the heat radiation of the motor vehicle assembly part, **characterised in that** the coating (14)
- is associated with an exterior surface of the motor vehicle assembly part;
- has at approximately 800 °C an emission degree e of less than 0.5;
- is made of a ceramic material.

2. Exhaust gas ducting motor vehicle assembly part comprising a coating which affects the heat radiation of a motor vehicle assembly part, **characterised in that** the surface of the motor vehicle assembly part (10, 50) has an infrared transparent coating which is substantially composed of an inorganic polymer network.

3. Motor vehicle assembly part according to Claim 1, **characterised in that** the coating is composed of zirconium oxide ZrO₂.

4. Motor vehicle assembly part according to Claim 1, **characterised in that** the coating is composed of yttrium oxide Y₂O₃.

5. Motor vehicle assembly part according to Claim 1, **characterised in that** the coating is composed of titanium oxide TiO₂.

6. Motor vehicle assembly part according to Claim 1, **characterised in that** the coating is composed of mixtures of zirconium oxide ZrO₂, yttrium oxide Y₂O₃, titanium oxide TiO₂.

7. Motor vehicle assembly part according to Claim 1 or 2, **characterised in that** the coating (14) is applied by means of flame or plasma jet spraying.

8. Motor vehicle assembly part according to one of the above claims, **characterised in that** the assembly part is an exhaust gas quarter bend pipe (10).

9. Motor vehicle assembly part according to one of Claims 1 to 8, **characterised in that** the assembly part is an advance pipe.

10. Motor vehicle assembly part according to one of Claims 1 to 8, **characterised in that** the assembly part is a catalyst element.

## Revendications

1. Élément conducteur des gaz d'échappement pour véhicule automobile, avec un revêtement influençant le rayonnement thermique de l'élément pour véhicule automobile, **caractérisé en ce que** le revêtement (14)
- est associé à une surface extérieure de l'élément pour véhicule automobile,
- présente à environ 800° C un degré d'émission ε inférieur à 0,5,
- est constitué d'un matériau céramique.

2. Élément conducteur des gaz d'échappement pour véhicule automobile avec un revêtement influençant le rayonnement thermique de l'élément pour véhicule automobile, **caractérisé en ce que** la surface de l'élément pour véhicule automobile (10, 50) présente un revêtement transparent aux infrarouges, constitué essentiellement d'un réseau ou un polymère non organique.

3. Élément pour véhicule automobile selon la revendication 1, **caractérisé en ce que** le revêtement est constitué d'oxyde de zirconium ZrO₂.

4. Élément pour véhicule automobile selon la revendication 1, **caractérisé en ce que** le revêtement est constitué d'oxyde d'yttrium Y₂0₃.

5. Élément pour véhicule automobile selon la revendication 1, **caractérisé en ce que** le revêtement est constitué d'oxyde de titane TiO₂.

6. Élément pour véhicule automobile selon la revendication 1, **caractérisé en ce que** le revêtement est constitué de mélanges d'oxyde de zirconium ZrO₂, d'oxyde d'yttrium Y₂0₃ et d'oxyde de titane TiO₂.

7. Élément pour véhicule automobile selon la revendication 1 ou 2, **caractérisé en ce que** le revêtement (14) est appliqué par une technique à la flamme, ou par projection au plasma.

8. Élément pour véhicule automobile selon l'une des revendications précédentes, **caractérisé en ce que** l'élément est un coude de gaz d'échappement (10).

9. Élément pour véhicule automobile selon l'une des revendications 1 à 8, **caractérisé en ce que** l'élément est un tube d'entrée.

10. Élément pour véhicule automobile selon l'une des revendications 1 à 8, **caractérisé en ce que** l'élément est un élément de catalyseur.
